Europäisches Patentamt

European Patent Office

Office européen des brevets

(11) Numéro de publication: **0 195 474**

**A2**

# (12) DEMANDE DE BREVET EUROPEEN

(21) Numéro de dépôt: **86200344.9**

(22) Date de dépôt: **07.03.86**

(51) Int. Cl.⁴: **F16C 32/00**

(30) Priorité: **15.03.85 IT 6725985**

(43) Date de publication de la demande:
**24.09.86 Bulletin 86/39**

(84) Etats contractants désignés:
**DE FR GB**

(71) Demandeur: **FEDERAL MOGUL CORPORATION**
**26555 N.W. Highway**
**Southfield Michigan 48034(US)**

(72) Inventeur: **Mollo, Francesco**
**Via Michelangelo 1**
**I-10082 Cuorgne (Torino)(IT)**

(74) Mandataire: **Patrito, Pier Franco, Dr. Ing.**
**Cabinet PATRITO BREVETTI Via Don Minzoni 14**
**I-10121 Torino(IT)**

(54) **Palier à douille bridée et procédé pour sa fabrication.**

(57) Un palier à douille bridée, constitué par une douille tubulaire (10) ayant à l'une de ses extrémités un creusement externe à gradin (12) et un biseau interne (13), et par une bride annulaire plate (20) ayant du côté de la face extérieure un élargissement interne (23) de son alésage (22). La bride (20) est insérée sur le creusement externe (12) de la douille (10) et la partie d'extrémité (14) de cette dernière, située entre le creusement externe (12) et le biseau interne (13), est déformée plastiquement vers l'extérieur et elle est insérée dans l'élargissement interne (23) de l'alésage (22) de la bride (20), de sorte que la douille (10) et la bride (20) sont solidarisées l'une l'autre. La douille (10) et la bride (20) sont fabriquées séparément et sont solidarisées l'une l'autre au moyen d'un poinçon spécial (30) poussé contre l'extrémité (14) de la douille (10) avec laquelle est accouplée la bride (20), et présentant une surface tronconique (32), de préférence dentelée ou rayée (33), appropriée pour déformer plastiquement vers l'extérieur l'extrémité (14) de la douille (10). Pour la réalisation d'un palier antifriction, dans lequel la surface interne de la douille (10) est revêtue d'une couche antifriction (11) et/ou la surface de la face externe de la bride (20) est revêtue d'une couche antifriction (21), on peut utiliser un matériau préalablement revêtu de la couche antifriction.

FIG. 2

## PALIER A DOUILLE BRIDEE ET PROCEDE POUR SA FABRICATION

La présente invention a pour objet un palier à douille bridée solidaire et un procédé pour sa fabrication.

Les paliers à douille bridée solidaire, utilisés spécialement dans la construction de moteurs et de transmissions mécaniques, comprennent une partie tubulaire formant une douille destinée à supporter une charge radiale, de l'une des extrémités de laquelle est solidaire une bride annulaire destinée à supporter une charge axiale en agissant comme palier de butée; ces parties son fabriquées en métal. Dans les paliers du type ainsi dit antifriction, le métal constituant la partie tubulaire et la bride annulaire est généralement de l'acier, et la surface interne de la douille ainsi que la surface de la face externe de la bride sont revêtues d'une couche d'un matériau ayant un coefficient de frottement réduit, tel que par exemple un alliage d'aluminium et d'étain. A présent, la plupart des paliers antifriction à douille bridée est fabriquée suivant un procédé traditionnel en partant d'éléments massifs. Ces éléments sont d'abord tournés pour en obtenir la douille et la bride respective réalisées d'une seule pièce; après le tournage, la pièce est soumise à l'application de la couche antifriction; et enfin on procède aux opérations de finissage. Les charges dérivant de ce cycle compliqué d'opérations ont une incidence considérable sur le prix de revient du produit final.

Selon un autre procédé connu, la douille et la bride sont fabriquées séparément, et ensuite elles sont solidarisées l'une l'autre par une opération de soudage par friction. Ce procédé de soudage est opérativement économique, mais les outillages destinés à le réaliser sont par eux-mêmes très couteux, et après le soudage ainsi effectué il est encore nécessaire d'effectuer une opération mécanique d'enlèvement des bavures de soudage. De plus, le procédé peut être appliqué seulement à des pièces de dimensions très limitées. De ce fait, ce procédé n'a pas porté des améliorations essentielles par rapport au procédé traditionnel mentionné auparavant.

Le but de l'invention est de réaliser un palier à douille bridée qui grâce à sa structure puisse être fabriqué d'une façon plus rapide, plus économique et qu'on puisse mieux organiser industriellement par rapport aux procédés connus.

Ce but est atteint au moyen d'un palier à douille bridée, constitué par une douille tubulaire présentant à l'une de ses extrémités un creusement externe à gradin et par une bride annulaire plate ayant dans son alésage, du côté de la face externe, un élargissement interne; ladite bride étant insérée sur le creusement externe de la douille et l'extrémité de cette dernière étant déformée plastiquement vers l'extérieur et étant insérée dans l'élargissement interne de l'alésage de la bride, de sorte que ladite douille et ladite bride sont solidarisées l'une l'autre d'une façon permanente.

Avantageusement, ladite extrémité de la douille ayant un creusement externe présente aussi un biseau interne, et la partie d'extrémité de la douille qui est déformée plastiquement vers l'extérieur est celle amincie par la présence dudit biseau.

De préférence, la portion de l'extrémité de la douille qui est déformée plastiquement vers l'extérieur présente une configuration finale conique.

De préférence, en outre, la portion de l'extrémité de la douille qui est déformée plastiquement vers l'extérieur présente une configuration finale non circulaire qui, en s'emboîtant partiellement dans le matériau de la bride, empêche positivement la rotation relative des parties solidarisées. Cette configuration finale non circulaire peut être formée avantageusement par une denteelure ou un rayage.

Le procédé de fabrication d'un tel palier à douille bridée, constituant lui-aussi un objet de l'invention, consiste à fabriquer séparément la douille annulaire avec creusement externe et la bride avec élargissement interne de l'alésage, à accoupler les deux parties ainsi obtenues et à les solidariser au moyen d'un poinçon spécial poussé contre l'extrémité de la douille à laquelle est accouplée la bride et ayant une surface tronconique appropriée pour déformer plastiquement vers l'extérieur l'extrémité de la douille.

De préférence, ledit poinçon présente sur ladite surface tronconique des saillies destinées à donner à l'extrémité correspondante de la douille une configuration non circulaire, et, de préférence, lesdites saillies peuvent avoir la forme d'une série de dents ou de rayures.

L'invention peut être appliquée à la fabrication de paliers soit en matériau monométallique, soit en matériau bimétallique, c'est à dire revêtu d'un matériau antifriction, soit encore de construction mixte, c'est à dire comprenant un composant en matériau monométallique et l'autre revêtu d'un matériau antifriction. En particulier, dans le cas où au moins l'un des composants est bimétallique, la douille peut être réalisée en usinant mécaniquement un tuyau déjà revêtu intérieurement d'une couche antifriction, ou bien un élément tubulaire obtenu en roulant un morceau de tôle déjà revêtu d'une couche antifriction sur l'une de ses faces, qui est placée à l'intérieur de la pièce enroulée, et la bride peut être réalisée en la découpant d'une tôle déjà revêtue d'un matériau antifriction sur l'une de ses faces, qui est placée du côté extérieur, de sorte qu'on obtient la plus grande économie dans la production de ces deux éléments, et en outre l'on peut facilement obtenir dans ces éléments les caractéristiques les plus favorables du revêtement antifriction, du fait que ce dernier est appliqué de façon continue sur un matériau semi-ouvré au lieu que sur des pieces déjà formées, soit dans les conditions opératives les plus favorables. L'opération de déformation plastique de l'extrémité de la douille est en soi de la plus grande simplicité et demande seulement l'emploi d'un poinçon spécial de coût très limité. La portion plastiquement déformée de l'extrémité de la douille n'intéresse pas les surfaces de glissement de la douille et de la bride, de sorte qu'aucune opération ultérieure d'usinage n'est nécessaire, même si l'opération de déformation plastique est effectuée sans aucune précaution particulière de précision. De tout cela il résulte une simplification et rationalisation des opérations de production et une réduction considérable du prix de revient du produit, tout sans en compromettre d'aucune façon la qualité.

Les caractéristiques et les avantages des objets de l'invention ressortiront plus clairement de la suivante description d'une forme de réalisation représentée - schématiquement dans le dessin annexé, dans lequel:

Fig. 1 montre, en vue dans la partie de droite et en section axiale dans la partie de gauche, la douille et la bride destinées à former le palier à douille bridée selon l'invention, encore séparées et superposées, ainsi que le poinçon spécial destiné à effectuer la solidarisation de ces pièces;

Fig. 2 montre, d'une manière semblable à la figure 1, le palier à douille bridée tel qu'il résulte de la solidarisation de la douille et de la bride selon la figure 1;

Fig. 3 montre en vue axiale du côté de la bride le palier à douille bridée selon la figure 2;

Fig. 4 montre à une échelle agrandie et en section les détails des parties de la douille et de la bride destinées à être accouplées l'une l'autre; et

Fig. 5 montre, d'une manière semblable à celle de la figure 4, les parties accouplées de la douille et de la bride après leur solidarisation.

Le palier à douille bridée selon l'invention, dans la forme de réalisation représentée, est du type antifriction et il comprend une douille 10 et une bride 20, fabriquées séparément et solidarisées l'une l'autre.

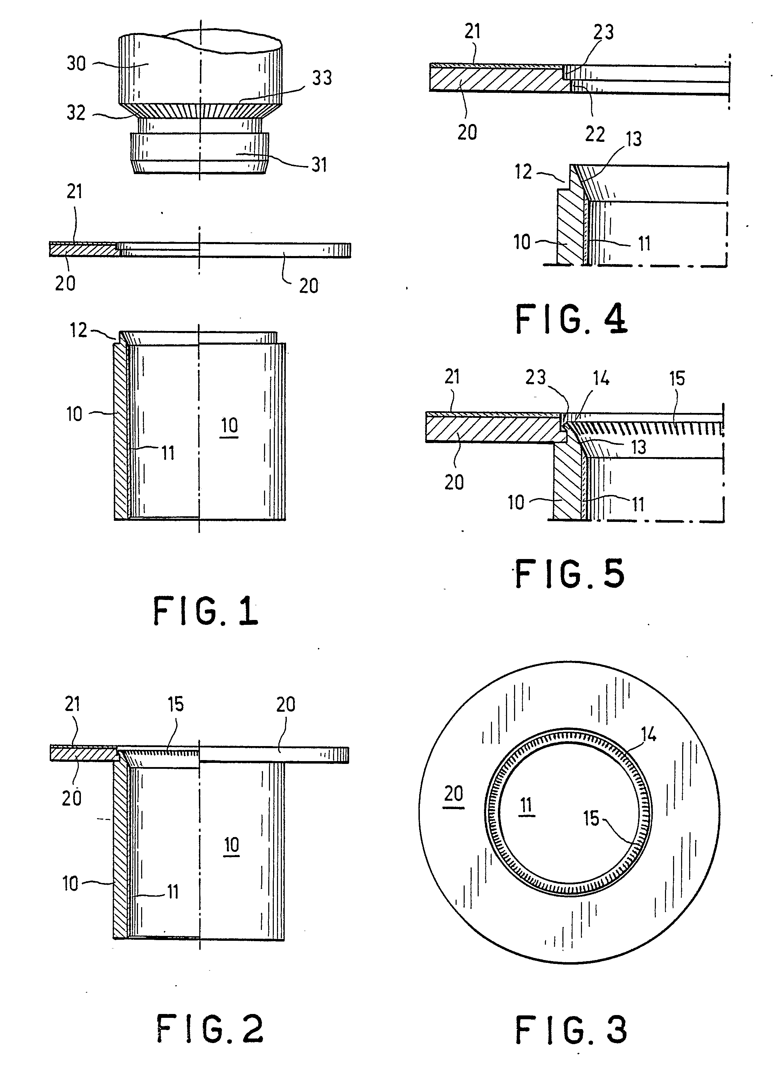

La douille 10 est formée par un corps cylindrique tubulaire, par exemple en acier, dont la surface interne est revêtue d'une couche 11 d'un matériau antifriction, par exemple un alliage d'aluminium et d'étain. La douille peut être fabriquée par usinage d'un tuyau, par exemple d'acier, dont la surface interne a été préalablement revêtue d'un matériau antifriction, ou bien par usinage d'un tronçon de tuyau obtenu en enroulant sur elle-même une bande découpée d'une tôle ayant l'une de ses surfaces revêtue d'un matériau antifriction, ce dernier étant disposé vers l'intérieur pendant l'enroulement. Le tuyau, obtenu de n'importe quelle façon, est usiné sur l'une de ses extrémités - (l'extrémité supérieure dans le dessin), en y formant un creusement externe 12, c'est à dire une partie de diamètre réduit, et un biseau interne 13 (figure 4).

La bride 20 est formée par un anneau plat, par exemple en acier, dont la surface d'une des faces, celle supérieure dans le dessin, est revêtue d'une couche 21 d'un matériau antifriction, par exemple un alliage d'aluminium et d'étain. La bride peut être fabriquée par usinage d'un élément découpé d'une tôle ayant l'une de ses surfaces revêtue d'un matériau antifriction, par exemple un alliage d'aluminium et d'étain. L'élément découpé est usiné pour former, dans son alésage central 22 et du côté de la surface revêtue par le matériau antifriction 21, un élargissement interne 23, constitué par une partie de diamètre plus grand (figure 4). Le diamètre de l'alésage central 22 de la bride 20 correspond, compte tenu d'un degré d'accouplement prédéterminé, au diamètre du creusement 12 de la douille 10.

La bride 20 peut être montée sur la douille 10 en insérant l'alésage central 22 sur le creusement externe 12 de la douille, et la solidarisation de ces deux parties est effectuée en déformant plastiquement vers l'extérieur un boudin 14 (figure 5) de la douille 10, délimité à l'extérieur par le creusement 12 et à l'intérieur par le biseau 13; ce boudin 14 se loge dans l'élargissement interne 23 de l'alésage de la bride 20.

L'opération de déformation plastique du boudin 14 est effectuée assez simplement au moyen d'un poinçon spécial 30 (figure 1). Ce poinçon présente une partie de centrage 31, de diamètre correspondant au diamètre intérieur de la douille 10 ayant le revêtement 11, et une partie opérative tronconique 32 qui, lors que le poinçon est baissé sur la douille 10 à laquelle est accouplée la bride 22, donne lieu à la déformation plastique du boudin 14 vers l'extérieur, en poussant ainsi ce boudin dans l'élargissement interne 23 de l'alésage de la bride.

Il est avantageux que la surface opérative tronconique 32 du poinçon 30 présente une pluralité de saillies, sous la forme de petits dents ou rayures 33. Ces derniers, au moment du poinçonnage, pénètrent dans le matériau du boudin 14, en y imprimant des traces 15. A ces traces visibles de l'extérieur correspondent des déformations de la partie du boudin 14 qui engage l'alésage central 22 de la bride 20, de sorte que la région de contact entre ces parties ne résulte pas circulaire, mais légèrement dentelée. Cela empêche positivement toute rotation réciproque entre la douille 10 et la bride 20, tandis que la pénétration du boudin 14 dans l'élargissement interne 23 de l'alésage de la bride empêche positivement un éloignement axial des deux parties. Ainsi la solidarisation entre la douille et la bride résulte complète et définitive.

Bien entendu, la douille 10 peut être aussi bien usinée à ses deux extrémités, et accouplée avec deux brides comme celle indiquée par 20, lors qu'il s'agit de fabriquer une douille antifriction ayant deux brides de butée, et cela simplement en répétant sur les deux extrémités de la douille la structure et les opérations décrites.

Dans la description de l'exemple de réalisation on a considéré un palier dont les composants sont bimétalliques, mais comme on peut bien le comprendre, la structure et le procédé selon l'invention peuvent être également appliqués à des paliers dont les composants sont monométalliques, ainsi qu'à des paliers dans lesquels l'un des composants est monométallique et l'autre est bimétallique, et dans lesquels le matériau de base peut être aussi différent pour les deux composants, du fait qu'il n'existe aucun problème pour la connexion simplement mécanique des parties, effectuée sans aucune opération de soudage.

La structure décrite du palier antifriction à douille bridée autorise une fabrication simple et rapide, qu'on peut organiser d'une manière rationale, en n'importe quelle grandeur, au moyen d'outillages de coût réduit, et de ce fait le palier à douille bridée peut être fabriqué à un prix de revient industriel nettement inférieur à celui d'un palier de qualité égale fabriqué par les procédés connus.

Bien entendu, les formes particulières et les dimensions données au creusement de la douille, à l'élargissement de l'alésage de la bride et au biseau de la douille, ainsi qu'aux rayures ou dentelures destinées à empêcher la rotation entre les deux parties, peuvent varier d'un cas à l'autre suivant les exigences des différentes applications. Dans certains cas le biseau interne de la douille peut être omis.

**Revendications**

1. Palier à douille bridée, caractérisé en ce qu'il est constitué par une douille tubulaire (10) présentant à l'une de ses extrémités un creusement externe à gradin (12), et par une bride annulaire plate (20) ayant dans son alésage (22), du côté de la face externe, un élargissement interne (23), ladite bride (20) étant insérée sur le creusement externe - (12) de la douille (10), et l'extrémité (14) de cette dernière étant déformée plastiquement vers l'extérieur et étant insérée dans l'élargissement interne (23) de l'alésage (22) de la bride (20), de sorte que ladite douille (10) et ladite bride (20) sont solidarisées l'une l'autre d'une façon permanente.

2. Palier à douille bridée selon la revendication 1, caractérisé en ce que ladite extrémité (14) de la douille (10) ayant un creusement externe (12) présente aussi un biseau interne (13), et la partie (14) de l'extrémité de la douille - (10) qui est déformée plastiquement vers l'extérieur est celle amincie par la présence dudit biseau (13).

3. Palier à douille bridée selon la revendication 1, caractérisé en ce que la partie (14) de l'extrémité de la douille (10) qui est déformée plastiquement vers l'extérieur présente une configuration finale substantiellement conique (figure 5).

4. Palier à douille bridée selon la revendication 1, caractérisé en ce que la partie (14) de l'extrémité de la douille (10) qui est déformée plastiquement vers l'extérieur présente une configuration finale non circulaire qui, en s'emboîtant partiellement dans le matériau de la bride (20), empêche positivement la rotation relative des parties - (10,20) solidarisées.

5. Palier à douille bridée selon la revendication 4, caractérisé en ce que ladite configuration finale non circulaire est formée par une denture ou un rayage (15, figure 3).

6. Palier à douille bridée selon la revendication 1, caractérisé en ce qu'au moins l'un de ses composants - (10,20) est bimétallique, la surface interne de la douille tubulaire (10) étant revêtue d'une couche antifriction (11) et/ou la surface de la face externe de la bride annulaire (20) étant revêtue d'une couche antifriction (21).

7. Procédé pour la fabrication d'un palier à douille bridée, caractérisé en ce qu'il consiste à fabriquer séparément une douille tubulaire (10) présentant à l'une de ses extrémités un creusement externe (12) et une bride annulaire plate - (20) présentant dans son alésage (22), du côté de sa face externe, un élargissement interne (23), à accoupler les deux parties (10,20) ainsi obtenues et à les solidariser au moyen d'un poinçon (30) poussé contre l'extrémité (14) de la douille (10) à laquelle est accouplée la bride (20) et ayant une surface tronconique (32) appropriée pour déformer plastiquement vers l'extérieur l'extrémité (14) de la douille - (10).

8. Procédé de fabrication selon la revendication 7, caractérisé en ce que dans son exécution on emploie un poinçon (30) présentant sur ladite surface tronconique (32) des saillies (33) destinées a donner à l'extrémité correspondante (14) de la douille (10) une configuration non circulaire (15).

9. Procédé de fabrication selon la revendication 8, caractérisé en ce que lesdites saillies (33) de la surface tronconique (32) du poinçon (30) ont la forme d'une série de dents ou de rayures (33, figure 1).

10. Procédé selon la revendication 7, pour la production de paliers antifriction, caractérisé en ce que ladite douille tubulaire (10) et/ou ladite bride annulaire (20) sont fabriquées par usinage d'un matériau déjà préalablement pourvu d'une couche antifriction (11,21).

FIG. 1

FIG. 2

FIG. 3

FIG. 4

FIG. 5